Europäisches Patentamt

**European Patent Office** (11) Publication number: **0 309 296**

Office européen des brevets **A1**

(12) **EUROPEAN PATENT APPLICATION**

(21) Application number: 88308910.4

(22) Date of filing: 26.09.88

(51) Int. Cl.⁴: **A 22 B 5/20**
A 22 B 5/00, A 22 C 17/02

(30) Priority: 25.09.87 NZ 221947

(43) Date of publication of application:
29.03.89 **Bulletin 89/13**

(84) Designated Contracting States:
AT BE CH DE ES FR GB GR IT LI LU NL SE

(71) Applicant: **The Meat Industry Research Institute of New Zealand, Inc.**
**East Street**
**Hamilton (NZ)**

(72) Inventor: **Hintz, Neil Anton**
**28 Sheridan Street**
**Hamilton (NZ)**

**Bryant, Paul Arthur**
**McLarnon Road**
**Cambridge (NZ)**

**Authier, Jaap Frank**
**66A Grey Street**
**Cambridge (NZ)**

(74) Representative: **Lawrence, John Gordon et al**
**McNeight & Lawrence Regent House Heaton Lane**
**Stockport, Cheshire SK4 1BS (GB)**

(54) A method and means for the processing of the head portion of an animal carcass.

(57) There is disclosed apparatus for the mechanical processing of the severed head portion of an animal carcass. The apparatus comprises a clamping arrangement in which the head can be located and retained. A splitting blade (34) is mounted for movement to longitudinally split the head. Upon completion of splitting by the splitting blade (34) a prising arrangement prises the head open and pressure means is operative to extract brain from the head.

There is also disclosed a method of splitting the severed head of an animal carcass and then extracting brain from the head by pressure means once the split head has been prised open.

FIG. 1.

## Description

## PROCESSING OF THE HEAD PORTION OF AN ANIMAL CARCASS

This invention relates to a method and means for the processing of the head portion of an animal carcass and more particularly to a method and means for the splitting of the head portion followed by extraction of brain therefrom.

During the processing of animal carcasses the head of the carcass is usually severed and removed for separate or further processing. This processing normally involves splitting of the head and extraction of the brain. This operation tends to be labour intensive and while it is known to provide a machine for splitting the head such machines have required manual loading and unloading. The opening of the head and extraction of the brain are all traditionally manual operations.

Not only are these operations laborious but they are also dangerous by virtue of the very nature of the operations.

It is accordingly an object of the present invention to provide a method and means whereby a head severed from an animal carcass can be split and opened and the brain extracted therefrom.

According to one broad aspect of the invention there is provided a method of processing the head portion of an animal carcass comprising the steps of locating and retaining a head to be processed said head having been severed from an animal carcass, longitudinally splitting said located and retained head by mechanical means, prizing open by mechanical means the thus split head and extracting by pressure means the brain exposed in the prized open head.

In the preferred form of the invention the head to be processed is mechanically transferred from conveyor means into the located and retained position. Preferably the head is mechanically removed upon completion of the brain extraction.

Preferably the brain is extracted by negative pressure means and held temporarily in a receiving container.

According to a second broad aspect of the invention there is provided apparatus for the mechanical processing of the severed head portion of an animal carcass said apparatus comprising clamping means in which said head can be located and retained, a splitting blade mounted for movement to longitudinally split the head, means for prizing the head open upon completion of splitting by the splitting blade and pressure means operative to extract the brain from the head once it has been prized open.

Preferably the means for prizing is integrally formed with or forms part of said clamping means.

In a preferred form the apparatus also incorporates a mechanical transfer means whereby a head supported by conveyor means can be mechanically located for clamping by said clamping means.

Preferably the splitting blade includes a recess in its leading or cutting edge the recess being positioned such as to locate over said brain during the splitting operation in order to avoid excessive damage to the brain.

In the following more detailed description of the invention reference will be made to the accompanying drawings in which:-

Figure 1 is a perspective view of one form of apparatus according to the present invention,

Figure 2 is a similar view but highlighting the head transfer mechanism and clamping means,

Figure 3 is a view similar to Figure 2 but showing the head at the point of being transferred and clamped,

Figure 4 is a view highlighting the head clamped in the clamping means and the splitting blade at the point of commencement of operation,

Figure 5 is a view similar to Figure 4 but showing the splitting blade at the end of the splitting operation,

Figure 6 is a view similar to Figure 5 but showing the split head opened and exposing the brain,

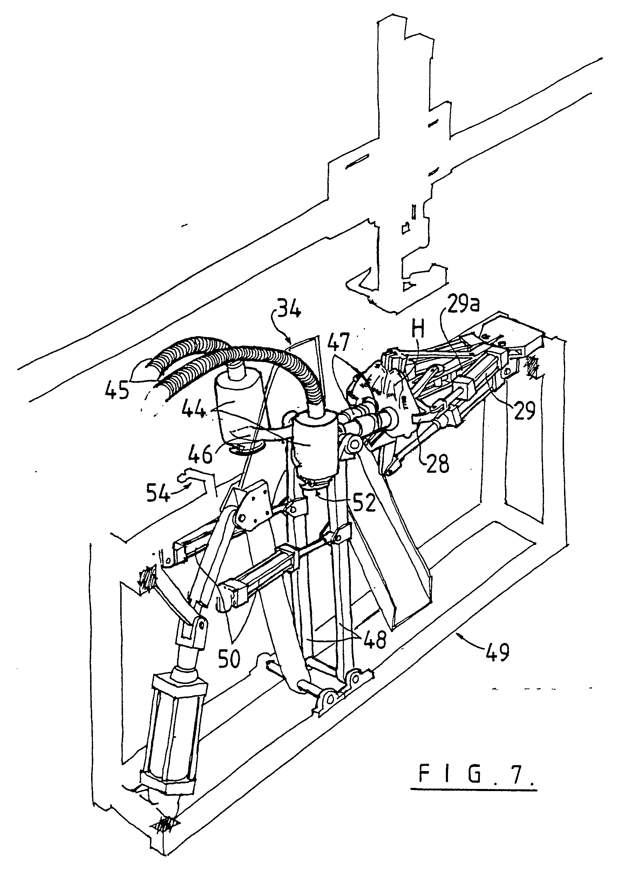

Figure 7 is a view highlighting the brain extraction means, and

Figure 8 is a view showing the mechanism for release and removal of the processed head and extracted brain.

The following describes, with reference to the drawings, apparatus and a method which constitutes the preferred form of the invention, however, other arrangements of apparatus can be employed within the broad scope of the invention. The following is thus by way of example only.

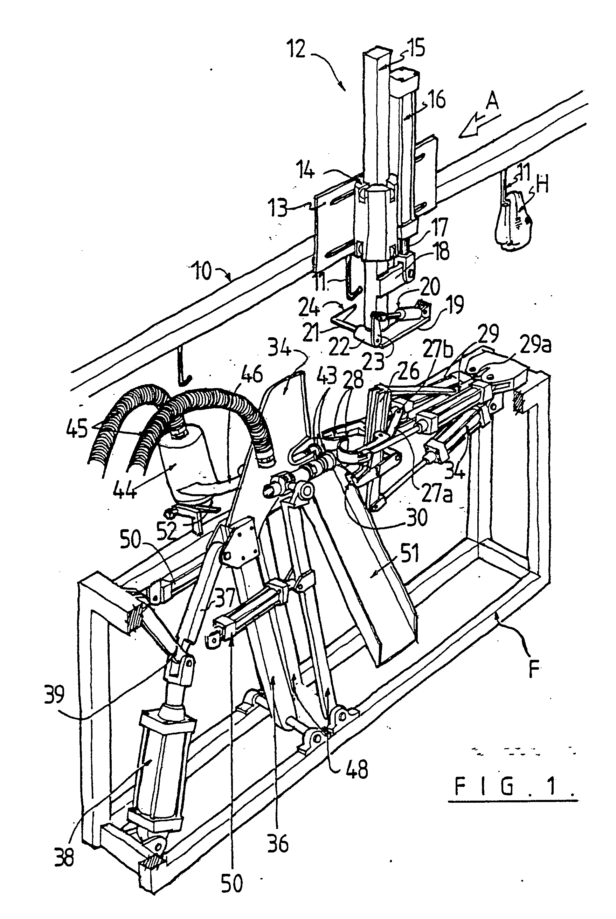

Referring firstly to Figure 1 of the drawings there is shown a conventional chain 10 having a series of chain hooks 11. Suspended from one of these hooks 11 is a sheep's head H. The direction of chain travel is shown by arrow A.

While the head can be manually transferred from the chain 10 to the apparatus there is according to the preferred form of the invention a mechanical transfer device 12. This device comprises a support plate 13 which is associated with the chain 10. A guide 14 is carried by the support plate 13 and slidingly engaged within the guide 14 is an elongate member 15.

Also carried by the support plate 13 is a linear actuator 16 in the form of a pneumatic ram. The piston rod 17 of ram 16 is coupled to a flange 18 extending transversely from elongate member 15. Accordingly as the ram is actuated the elongate member 15 slides within the guide 14.

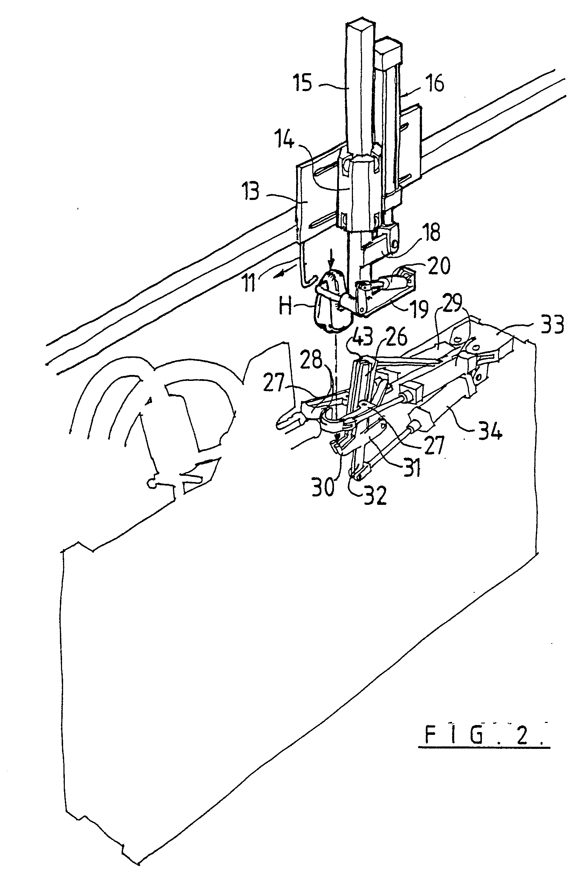

The lower end of elongate member 15 is formed with a mounting 19 which carries a small pneumatic ram 20. A shaft 21 is journalled in a bearing 22 with the shaft 21 being connected to an arm 23 coupled to the piston rod of ram 20. The distal end of shaft 21 is formed with a finger 24 which as can be seen from Figure 1 locates just below the return portion of the chain hook 11. Accordingly as a head H suspended on hook 11 passes finger 24 it becomes engaged on the finger as shown in Figure 2. Transfer of the head H onto the transfer device is thus carried out automatically.

Referring more specifically to Figure 2 there is illustrated the clamping mechanism with which the head H is located and retained. This clamping mechanism comprises a back support 26 which is flanked by a pair of levers 27 which are conveniently pivotally mounted in their length to the back support 26. The outer ends of levers 27 are each provided with a hook portion 28. Operation of the levers 27 is carried out by individual rams 29 the bodies of which are pivotally coupled to a mounting 33. Extending away from levers 27 are arms 27a which combine in a common pivot pin 27b which is coupled to the piston rod of a small ram 29a.

Located beneath the back support 26 is a movable clamp base 30 which in the preferred form consists of a pair of fingers carried by a pivotal mounting 31 which has a downwardly projecting extension 32 pivotally attached to the piston rod of a ram 34. This ram 34 is once again pivotally mounted to the fixed mounting 33.

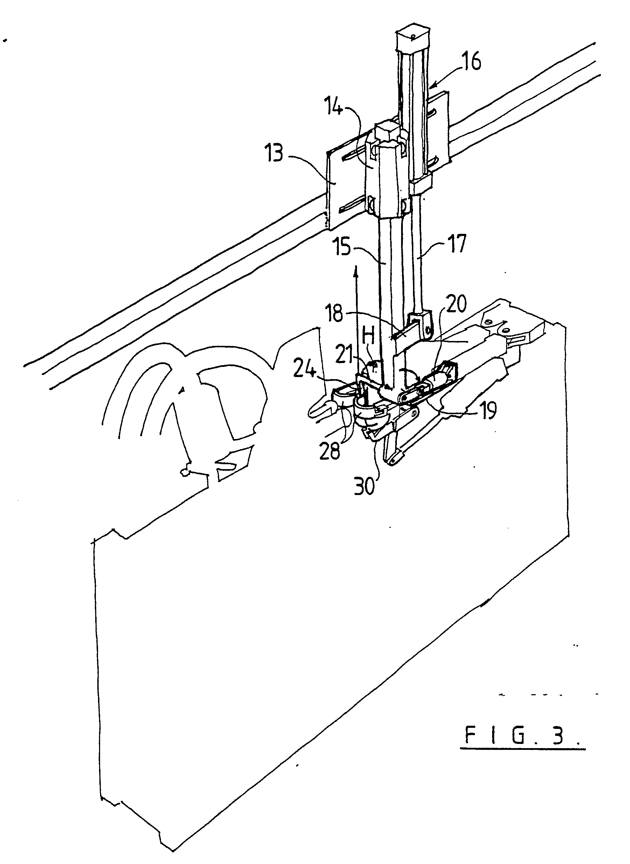

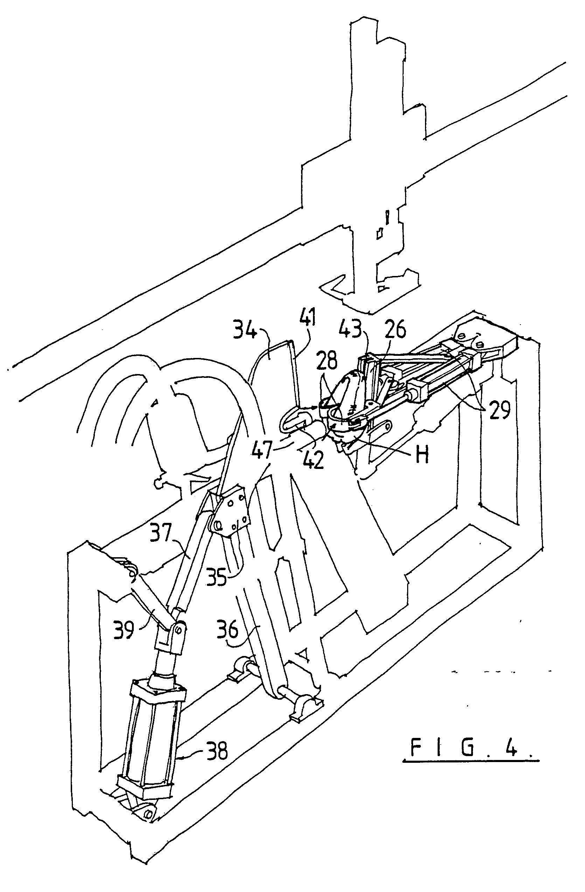

As shown in Figure 3 the head is lowered into the clamping mechanism by the downward movement of elongate member 15 controlled by ram 16. With the head located in the clamping mechanism the release cylinder 20 is operated so as to pivot shaft 21 and thus remove finger 24 from within the head. The transfer mechanism can then be returned to the rest position as shown for example in Figure 4.

With the head H in the clamping mechanism the rams 29 are actuated at low pressure so as to cause the hook portions 28 to engage with the head and due to the position of the pivots of levers 27 this causes a slight outward movement of the hooks away from each other so as to provide a space through which the splitter blade 34 can pass. The levers 27 and hence hooks 28 are held in position by the assistance of subsidiary ram 29a acting through entensions 27a.

Referring now to Figure 4 the splitter blade 34 is mounted for longitudinal movement within the frame F of the apparatus. Accordingly blade 34 is mounted by a carrier 35 mounted to the distal end of a pivoted support arm 36. A secondary arm 37 is pivotally coupled to the carrier 35 and is pivotally connected at its end to the piston rod of a ram 38. The control linkage for the splitting blade 34 is completed by a toggle linkage 39 which is pivoted between the coupling at the end of the piston rod and a mounting arrangement carried by a cross member 40 of frame F.

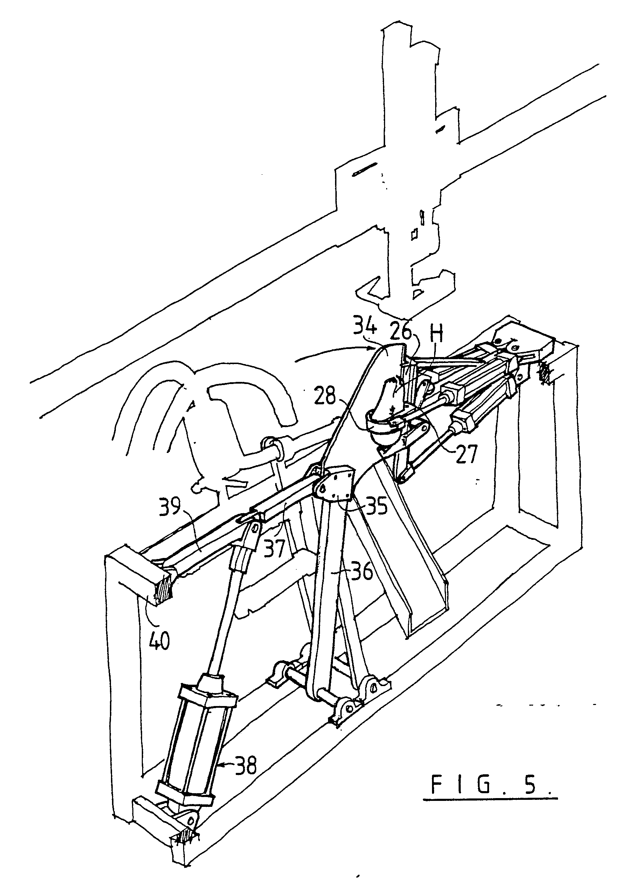

By actuating the ram 38 the splitting blade moves between the hook portions 28 of the clamping mechanism and engages with the head H to thereby longitudinally split the head. The leading or cutting edge 41 of the blade 34 incorporates a recess 42 which is so positioned that it locates over the brain in the head to thereby avoid excessive damage to the brain during the splitting operation. The completion of the splitting operation is illustrated in Figure 5.

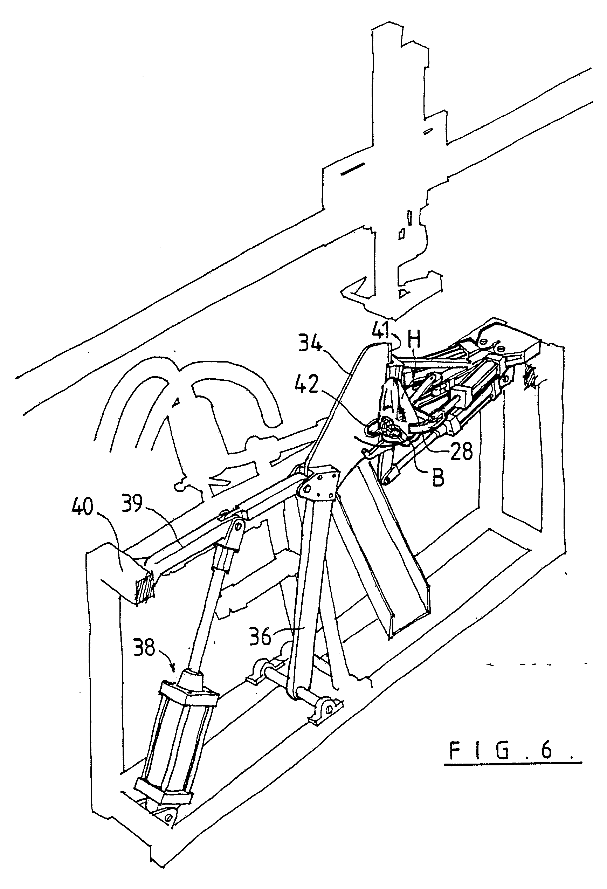

Upon completion of the splitting operation rams 29 of the clamping mechanism are actuated at high pressure so that the hook portions 28 carried by lever 27 are drawn outwardly and rearwardly so as to prize open the split head. Ram 29a also activates so as to appropriately move pivot 27b. The completion of this operation is illustrated in Figure 6 and it will be observed that the blade 34 is still in its outer most position. In this outer most position the leading or cutting edge 41 is shown as locating in a longitudinal recess 43 in the back support 26. Figure 6 also illustrates the exposure of the brain B.

The operation continues by retraction of the blade 34 to its retracted or rest position. This permits the brain extraction mechanism to be moved into position for extraction of the brain. This mechanism preferably operates on a negative pressure and accordingly there is provided a pair of vacuum cyclones 44 (note only one cyclone being illustrated in Figure 1). Suitable conduits 45 connect the cyclones 44 to a vacuum source (not shown). Leading from each cyclone 44 is a suction tube 46 which is coupled to a suction nozzle 47.

The cyclones are carried by a movable support frame or arms 48 pivoted to the base 49 of the frame F. Movement of the support frame 48 is achieved by control rams 50 carried by frame F.

Accordingly once the head H has been split and prized open with the splitting blade 34 retracted, rams 50 are actuated so as to move the suction mechanism into a position where suction nozzles 47 engage with the head and are located over the brain B. At this point suction is applied whereupon the brain is extracted into cyclones 44 to be temporarily held therein.

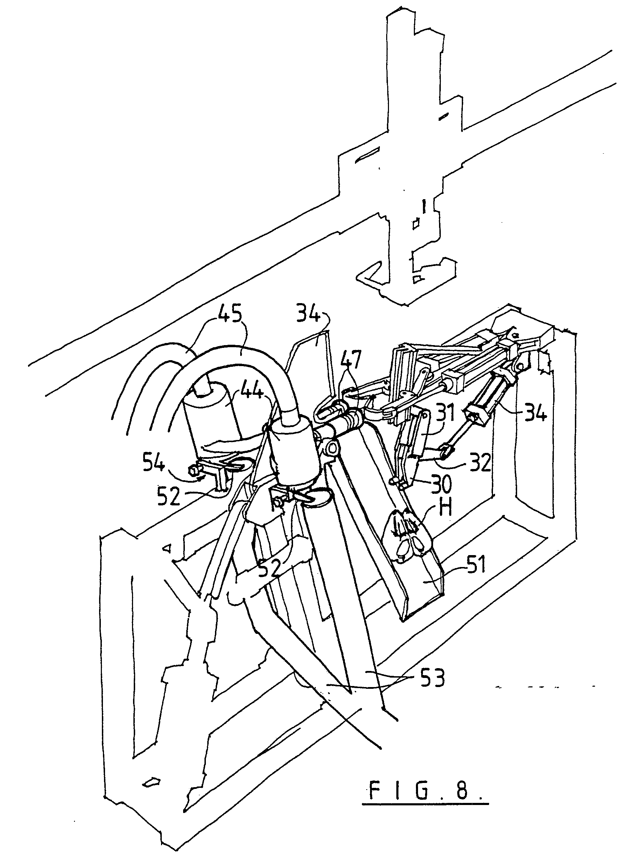

Upon extraction being completed rams 50 are retracted which draws the cyclones back to their rest position. At this point ram 34 of the clamping mechanism is actuated together with rams 29/29a such that the levers 27 and extensions 27a move back to their rest position. This causes the clamping mechanism to release the head (see Figure 8) where upon the head can drop down into an exit chute 51.

At the same time flaps 52 covering exit ports in the cyclones 44 open allowing the brain to pass into conduits 53 for removal to a collection area.

Flaps 52 are mechanically operated by adjustable stops 54 carried by the top frame members of frame F. These flaps 52 remain open until rams 50 are actuated. Accordingly the flaps 52 vent the cyclones so that no suction takes place at the suction nozzles until such time as the support frame 48 commences to move whereupon the flaps spring shut thereby establishing the necessary negative pressure within the cyclones to ensure there is suction at the suction nozzles47.

While in the preferred form of the apparatus as illustrated the head is loaded vertically downward from the chain 10 the apparatus could equally be loaded horizontally using a form of conveyor or from below using an elevator type device.

In a further form a number of head holding devices can be placed on a chain conveyor and the head splitting blade and brain extraction vacuum system can be so positioned on the chain as to be able to successively carry out splitting of extraction operations on heads held by the head holding devices.

The method and apparatus according to the present invention provides a mechanical means of clamping a head followed by splitting of the head and the prizing open thereof so as to provide for pressure removal of the brain.

## Claims

1. A method of processing the head portion of an animal carcass comprising the steps of locating and retaining a head to be processed said head having been severed from an animal carcass, longitudinally splitting said located and retained head by mechanical means, prizing open by mechanical means the thus split head and extracting by pressure means the brain exposed in the prized open head.

2. The method according to claim 1 wherein the head to be processed is mechanically transferred from conveyor means into the located and retained position.

3. The method according to claim 1 and 2 wherein the head is mechanically removed upon completion of the brain extraction.

4. The method according to claim 1, 2 or 3 wherein the brain is extracted by negative pressure means.

5. Apparatus for the mechanical processing of the severed head portion of an animal carcass said apparatus comprising clamping means in which said head can be located and retained, a splitting blade mounted for movement to longitudinally split the head, means for prizing the head open upon completion of splitting by the splitting blade and pressure means operative to extract the brain from the head once it has been prized open.

6. Apparatus as claimed in claim 5 wherein the clamping and prizing means includes a pair of clamp members which are movable to engage within and apply outward pressure to the skull of the head to be processed, said clamp members being further movable to prize open the head following completion of splitting by the splitting blade.

7. Apparatus as claimed in claim 5 or 6 wherein the splitting blade includes a recess in its leading or cutting edge, said recess being positioned such as to locate over said brain during the splitting operation.

8. Apparatus as claimed in any one of claims 5 to 7 wherein said pressure means includes at least one suction tube which is movable to locate adjacent the exposed brain in the head and extract the brain by suction, and tube having a nozzle at one end and at its other end a vacuum cyclone, said cyclone being coupled to a vacuum source, the cyclone including an outlet which is operable to permit brain sucked into the cyclone to be released into transport means.

9. Apparatus as claimed in any one of preceding claims 5 to 8 further including mechanical transfer means whereby a head supported by conveyor means can be mechanically located for clamping by said clamping means.

10. Apparatus as claimed in claim 9 wherein the mechanical transfer means includes a receiving member which is engageable with a head being supported on a conveyor such as to remove the head from the conveyor support, said receiving member being movable away from the conveyor to a position where the head is located with said clamping means, there being means for disengagement of said receiving means from said head upon the head being located with the clamping means.

F I G . 1 .

F I G . 2 .

F I G. 3.

FIG. 4.

F I G . 5 .

F I G . 6 .

F I G . 7 .

F I G . 8 .

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4662028 (LEINING)<br>* claim 1; figures 1-3 *<br>--- | 1-3, 5 | A22B5/20<br>A22B5/00<br>A22C17/02 |
| A | GB-A-681973 (VERMEHREN)<br>* page 1, line 39 - page 1, line 50 *<br>* page 2, line 87 - page 2, line 97; figure 1 *<br>--- | 4, 8 | |
| A | US-A-3105993 (COOK)<br>--- | | |
| A | US-A-4653145 (SWILLEY)<br>--- | | |
| A | US-A-2549937 (SCHMIDT)<br>----- | | |

TECHNICAL FIELDS
SEARCHED (Int. Cl.4)

A22B
A22C

The present search report has been drawn up for all claims

| Place of search | Date of completion of the search | Examiner |
|---|---|---|
| THE HAGUE | 5 JANUARY 1989 | VON ARX V.U. |

EPO FORM 1503 03.82 (P0401)